# EUROPEAN PATENT APPLICATION

(11) **EP 4 769 908 A1**
(43) Date of publication of application: **01.07.2026**
(21) Application number: 25221660.1
(22) Date of filing: 09.12.2025
(51) Int. Cl.: H02K 3/38, H02K 3/50

(54) **DRIVE DEVICE**

(30) Priority: 26.12.2024 JP 2024230901
(71) Applicant: TOYOTA JIDOSHA KABUSHIKI KAISHA, Toyota-Shi, Aichi-Ken 471-8571 (JP)
(72) Inventor: ASAI, Takanori, Toyota-shi 471-8571 (JP); KAWAKAMI, Jun, Toyota-shi 471-8571 (JP); OHIRA, Kengo, Toyota-shi 471-8571 (JP); KAJIMOTO, Shogo, Toyota-shi 471-8571 (JP)
(74) Representative: TBK

(57) **Abstract**

A drive device may include: a plurality of power lines respectively connected to coils attached to a stator core; a plurality of first terminals disposed respectively at ends of the plurality of power lines opposite to ends of the plurality of power lines that are connected to the coils; a terminal block; a plurality of second terminals supported by the terminal block, with the plurality of second terminals spaced from each other; a plurality of fastening members fixed to the terminal block and fastening the plurality of first terminals and the plurality of second terminals in pairs on one-to-one basis; and one or more partitions each formed by an insulator located between adjacent ones of the plurality of power lines.

## Description

### CROSS REFERENCE TO RELATED APPLICATIONS

This application claims priority from Japanese Patent Application No. 2024-230901 filed on December 26, 2024. The entire content of the priority application is incorporated herein by reference.

### TECHNICAL FIELD

The art disclosed herein relates to a drive device.

### BACKGROUND ART

Japanese Patent Application Publication No. 2022-81278 describes a drive device including a motor, an inverter configured to control current supplied to the motor, and a plurality of plate bus bars electrically connecting the motor and the inverter. The respective bus bars are stacked along a line on each other in a plate thickness direction. According to Japanese Patent Application Publication No. 2022-81278, three coil wires for connection corresponding to U-phase, V-phase, and W-phase extend from ends of coils of the motor. Each connection coil wire has a crimp terminal at its tip connected to a corresponding one of the three bus bars.

### SUMMARY

An interval between conductor wires electrically connecting an inverter and a coil of a motor is narrow, as a result of which short-circuiting may have occurred due to foreign substances for example and/or the conductor wires may have contacted each other due to vibration. The present teachings provide an art configured to avoid such contact and/or short circuiting.

A drive device may comprise a plurality of power lines respectively connected to coils attached to a stator core, a plurality of first terminals disposed respectively at ends of the plurality of power lines opposite to ends of the plurality of power lines that are connected to the coils, a terminal block, a plurality of second terminals supported by the terminal block, with the plurality of second terminals spaced from each other, a plurality of fastening members fixed to the terminal block and fastening the plurality of first terminals and the plurality of second terminals in pairs on one-to-one basis, and one or more partitions each formed by an insulator located between adjacent ones of the plurality of power lines.

According to this configuration, the partition(s) can suppress the adjacent power lines from contacting each other and/or short circuiting.

In one aspect of the present teachings, each of the plurality of power lines may comprise a flexible conductor and an insulating film covering around the conductor. According to the above configuration, even if the insulating films are broken and the conductors as the power lines are exposed, such conductors can be suppressed from contacting each other by the presence of the partition(s).

In one aspect of the present teachings, the one or more partitions are integrally molded with the terminal block. According to the above configuration, the partition(s) integrally molded with the terminal block can suppress the adjacent power lines from contacting each other.

In one aspect of the present teachings, the terminal block may comprise a support surface that supports the plurality of second terminals and to which the plurality of fastening members is fixed, and a side surface facing toward the power lines extending from the plurality of first terminals. The one or more partitions may comprise a first partition portion protruding from the side surface and separating the adjacent power lines, and a second partition portion protruding from the support surface and separating adjacent ones of the plurality of first terminals. According to the above configuration, the first partition portion and the second partition portion can be suppress the adjacent power lines from contacting each other and the adjacent first terminals from contacting each other.

In one aspect of the present teachings, the second partition portion may comprise a plurality of pairs of wall portions, each pair of wall portions corresponding to one of the plurality of first terminals, and each pair of wall portions may be located at a position sandwiching the corresponding first terminal in a direction along which the plurality of first terminals is aligned. According to the above configuration, each of the plurality of first terminals can be suppressed from rotating and thus the first terminals can be suppressed from contacting each other.

In one aspect of the present teachings, the drive device may further comprise a cover attached to the terminal block, wherein the cover is formed by an insulator and covers an area including at least one of the plurality of power lines, at least one of the plurality of first terminals, at least one of the plurality of second terminals, and at least one of the plurality of fastening members. The one or more partitions may be a part of the cover. According to the above configuration, by attaching the cover to the terminal block, the adjacent power lines can be suppressed from contacting each other.

### BRIEF DESCRIPTION OF DRAWINGS

FIG. 1 illustrates a diagram for schematically showing a configuration of a drive device.
FIG. 2 illustrates mainly cross sections of a first terminal and a second terminal along a line II-II in FIG. 1.
FIG. 3 schematically illustrates a configuration according to the first embodiment including a terminal block as viewed from a viewpoint facing a side surface of the terminal block.
FIG. 4 schematically illustrates a configuration according to the second embodiment including a terminal block as viewed from a viewpoint facing a side surface of the terminal block.
FIG. 5 schematically illustrates the configuration shown in FIG. 4 from a viewpoint facing a support surface.
FIG. 6 schematically illustrates a configuration according to the third embodiment including a terminal block as viewed from a viewpoint facing a side surface of the terminal block.
FIG. 7 schematically illustrates the configuration shown in FIG. 6 from a viewpoint facing a support surface.
FIG. 8 illustrates a configuration according to the fourth embodiment from the same viewpoint as that of FIG. 2.
FIG. 9 illustrates the configuration according to the fourth embodiment from the same viewpoint as that of FIG. 3.
FIG. 10 illustrates the configuration according to the fourth embodiment from the same viewpoint as that of FIG. 5.

### DETAILED DESCRIPTION

With reference to drawings, an embodiment will be described. Each figure is merely illustrative, and the present embodiment is not limited to the contents shown in the figures. Also, since each figure is illustrative, a part thereof may be omitted.

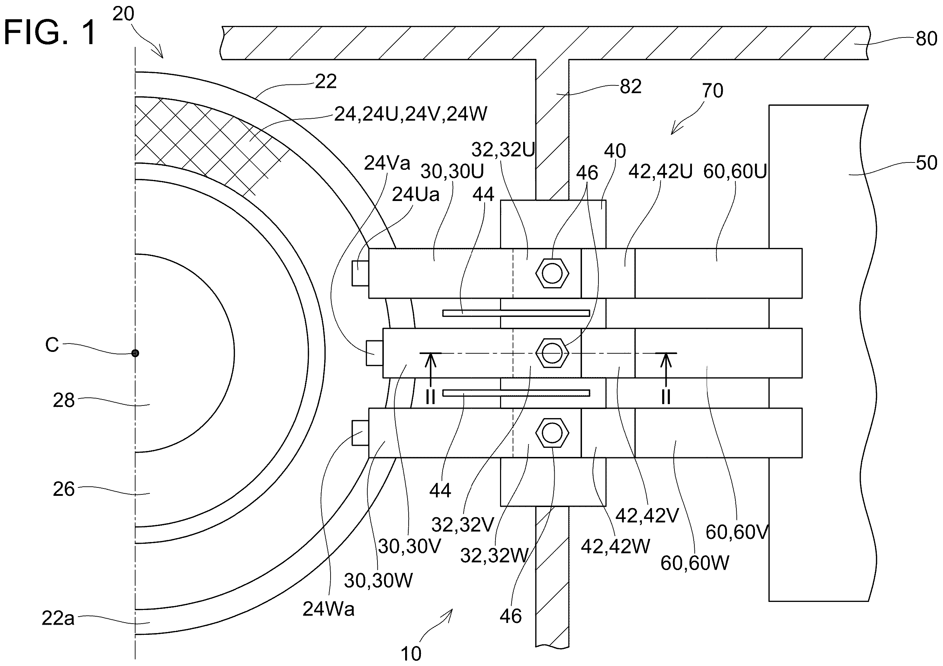

FIG. 1 schematically illustrates a configuration of a drive device 10. The drive device 10 includes, for example, all or some of the illustrated configurations. The drive device 10 may be referred to as a motor unit, for example. According to FIG. 1, the drive device 10 comprises a motor 20, an inverter 50, and wirings 70 electrically connecting the motor 20 and the inverter 50. The wirings 70 include power lines 30, first terminals 32, second terminals 42, and bus bars 60 to be described later. The drive device 10 is mounted in an electric vehicle, for example. The motor 20 is a traction motor for an electric vehicle, and is a prime mover configured to drive at least one wheel of the electric vehicle.

The drive device 10 is housed in a common casing 80. Inside of the casing 80 may be sectioned into, for example, a chamber housing the motor 20 and a chamber housing the inverter 50 by a partition 82. Alternatively, the casing 80 housing the motor 20 and the casing 80 housing the inverter 50 may be separate housings.

The motor 20 is supplied with electric power from an unillustrated battery through the inverter 50. The inverter 50 converts direct current supplied from the battery to three-phase alternating current, for example. Accordingly, the inverter 50 comprises a plurality of inverter bus bars 60. The plurality of inverter bus bars 60 comprises an inverter bus bar 60U, an inverter bus bar 60V, and an inverter bus bar 60W respectively corresponding to U-phase, V-phase, and W-phase.

The motor 20 comprises a shaft 28, a rotor 26, a stator core 22, and coils 24. The shaft 28 extends along a central axis C of the motor 20. The rotor 26 is substantially cylindrical. The rotor 26 is fixed to the shaft 28. The rotor 26 rotates with the shaft 28 about the central axis C. A direction parallel to a direction in which the central axis C is oriented will be referred to as an axial direction. In FIG. 1, the motor 20 is illustrated from a viewpoint facing an end surface 22a, which is one of surfaces of the stator core 22 that are oriented along the axial direction.

The stator core 22 is substantially cylindrical. A radial direction of the stator core 22 and a circumferential direction of the stator core 22 will be referred to as the radial direction and the circumferential direction, simply. The stator core 22 is disposed outside the rotor 26 in the radial direction. The coils 24 are attached to the stator core 22. The stator core 22 and the coils 24 will be collectively referred to as a stator. The coils 24 comprise a plurality of coils 24U, 24V, 24W respectively corresponding to U-phase, V-phase, and W-phase. In the motor 20, the three-phase alternating current in the U-phase, V-phase, and W-phase is inputted from the inverter 50 through the wirings 70 to the coils 24U, 24V, 24W of the stator, by which the rotor 26 and the shaft 28 rotate.

Although details will be omitted, each of the coils 24U, 24V, 24W is attached over a plurality of slots defined on the stator core 22 such that each of the coils 24U, 24V, 24W extends along the circumferential direction. Each of the coils 24U, 24V, 24W is configured by a plurality of conductive wires having a square/rectangular cross section, called segmented coils, being coupled to each other, for example. Specific configurations of the coils 24U, 24V, 24W are not limited in particular. For example, the coils 24U, 24V, 24W may have a concentrated winding structure or a distributed winding structure.

The plurality of power lines 30 is respectively connected to the coils 24. The plurality of power lines 30 includes power lines 30U, 30V, 30W respectively corresponding to U-phase, V-phase, and W-phase. One ends 24Ua, 24Va, 24Wa of the coils 24U, 24V, 24W are respectively connected to the power lines 30U, 30V, 30W in pairs of one end and one power line, by welding, for example. In FIG. 1, the power lines 30U, 30V, 30W are described as being connected to the one ends 24Ua, 24Va, 24Wa on the input side of the coils 24U, 24V, 24W, but these power lines 30U, 30V, 30W may be regarded as being connected to the other ends on the output side of the coils 24U, 24V, 24W. The other ends of the coils 24U, 24V, 24W may be respectively connected to so-called neutral wires. It may be understood that the plurality of power lines 30 and/or neutral wires can be regarded as a part of the wirings 70, and features of the present embodiment may be applied to the wirings 70.

The drive device 10 further comprises a terminal block 40, a plurality of second terminals 42, a plurality of fastening members 46, and one or more partitions 44. The terminal block 40 and the partition(s) 44 are constituted of insulator such as resin. The terminal block 40 is fixed to the casing 80. For example, a hole that connects the chamber housing the motor 20 and the chamber housing the inverter 50 is defined in a part of the partition 82, and the terminal block 40 is fixed in that hole. The terminal block 40 supports the plurality of second terminals 42 constituted of metal under a state where the second terminals 42 are spaced from each other. At respective ends of the plurality of power lines 30 opposite from the side connected to the coils 24, the plurality of first terminals 32 constituted of metal is disposed. The power line 30U has the first terminal 32U. Similarly, the power line 30V has the first terminal 32V, and the power line 30W has the first terminal 32W.

The plurality of fastening members 46 is fixed to the terminal block 40 while fastening the plurality of first terminals 32 and the plurality of second terminals 42 in pairs on one-to-one basis. The fastening members 46 are for example metal bolts. According to FIG. 1, the first terminal 32U and the second terminal 42U are fastened together by the fastening member 46. Likewise, the first terminal 32V and the second terminal 42V are fastened together by the fastening member 46, and the first terminal 32W and the second terminal 42W are fastened together by the fastening member 46. The partitions 44 are positioned between the adjacent power lines 30. According to FIG. 1, the partitions 44 are disposed respectively between the power line 30U and the power line 30V that are adjacent and between the power line 30V and the power line 30W that are adjacent.

As illustrated in FIG. 1, the plurality of inverter bus bars 60 and the plurality of second terminals 42 are connected to each other in pairs on one-to-one basis. The inverter bus bar 60U is connected to the second terminal 42U. Likewise, the inverter bus bar 60V is connected to the second terminal 42V, and the inverter bus bar 60W is connected to the second terminal 42W. How the inverter bus bar 60 and the second terminal 42 are connected is not limited in particular. The second terminals 42 may be a part of the inverter bus bars 60, that is, may be terminals of the inverter bus bars 60. On the terminal block 40, by the plurality of first terminals 32 and the plurality of second terminals 42 being connected to each other in pairs on one-to-one basis, the wirings 70 corresponding to U-phase, V-phase, and W-phase that electrically connect the inverter 50 to the coils 24U, 24V and 24W of the motor 20 can be realized.

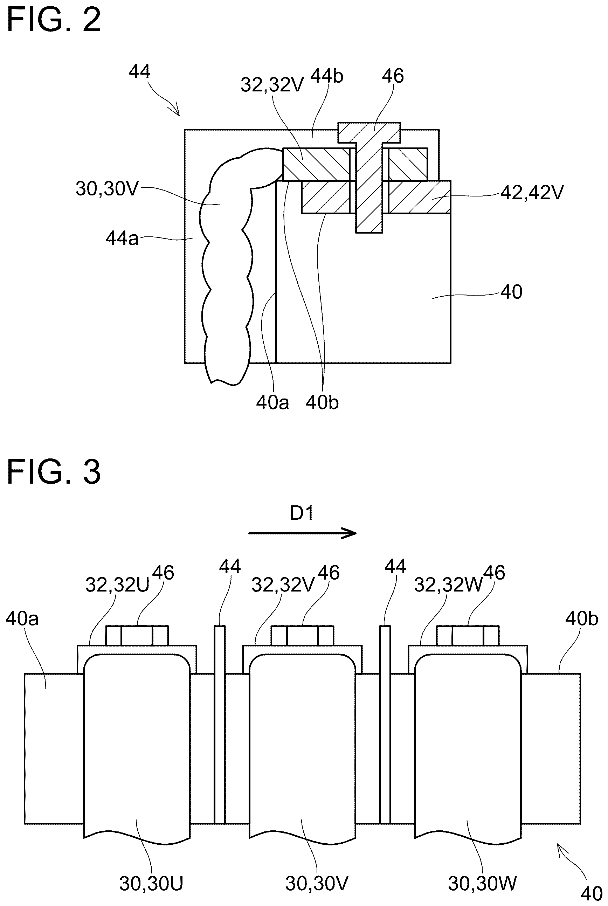

FIG. 2 illustrates cross-sections of the first terminal 32 and the second terminal 42 along a line II-II in FIG. 1. In FIG. 2, for easier understanding, only the first terminal 32, the second terminal 42, and the fastening member 46 are hatched to indicate the cross sections. In

FIG. 2, as an example of the combination of the first terminal 32 and the second terminal 42 that are fastened together, the first terminal 32V and the second terminal 42V are shown. The terminal block 40 comprises a support surface 40b which supports the second terminal 42. In the example of FIG. 2, the second terminal 42 is supported on the support surface 40b with at least a portion of the second terminal 42 being embedded in a recess defined on the support surface 40b. The second terminal 42 and the first terminal 32 are brought into contact with each other in a state of being stacked on each other, and the fastening member 46 is passed through through holes respectively defined in the first terminal 32 and the second terminal 42, by which the first terminal 32 and the second terminal 42 are fastened together. One end of the fastening member 46 having passed through the through holes defined respectively in the first terminal 32 and the second terminal 42 is fixed to the terminal block 40. Here, if the fastening member 46 is a bolt, the one end of the fastening member 46 may be fastened to threaded holes defined in the terminal block 40, or may be fastened by a nut fixed on the terminal block 40. Alternatively, the one end of the fastening member 46 may be fixed to the terminal block 40 by being fastened by a nut fixed on the second terminal 42.

The terminal block 40 comprises a side surface 40a, different from the support surface 40b, which faces toward the power lines 30 extending from the first terminals 32. FIG. 3 schematically illustrates a configuration including the terminal block 40 from a viewpoint facing the side surface 40a. A direction D1 in FIG. 3 is a direction along which the plurality of power lines 30 is aligned, and also a direction along which the plurality of first terminals 32 is aligned. The partition 44 shown in FIG. 2 is a partition 44 positioned at a position separating the power line 30V and the power line 30U that are adjacent, as can be understood with reference to FIGS. 1 and 3. As illustrated in FIG. 1, the partitions 44 also extend between the adjacent first terminals 32. According to FIG. 2, each of the partitions 44 comprises a first partition portion 44a protruding from the side surface 40a and separating the adjacent power lines 30 and a second partition portion 44b protruding from the support surface 40b and separating the adjacent first terminals 32. According to FIG. 2, each of the partitions 44 can be said as having a substantially L shape comprising two partition portions that are linked together, i.e., the first partition portion 44a extending along the side surface 40a and the second partition portion 44b extending along the support surface 40b.

Each of the plurality of power lines 30 may be a plate-like conductor such as a bus bar, and in the example of FIGS. 2, 3, each of the plurality of power lines 30 comprises a flexible conductor and an insulating film covering around the conductor. The flexible conductor is for example, a braided wire. The braided wire is constituted of a plurality of element wires being bundled and braided, and has a superior flexibility and bendability. As an example, cables constituted of such braided wires covered with a resin tube (a type of insulating film) are implemented as the power lines 30 (30U, 30V, 30W).

As an example, the partitions 44 are integrally molded with the terminal block 40. That is, the partitions 44 are a part of the terminal block 40, and are integrally molded with the terminal block 40 with the same material. Due to this, assembly of the drive device 10 including the partitions 44 and the terminal block 40, for example can be facilitated. Nevertheless, the partitions 44 may be fabricated separately from the terminal block 40 and may be directly or indirectly fixed to the terminal block 40. Alternatively, the partitions 44 may not be connected to the terminal block 40 as long as the partitions 44 are positioned at positions separating the adjacent power lines 30. The partitions 44 may be fixed to an object other than the terminal block 40, for example, may be fixed to the casing 80.

As such, according to the present embodiment, because the drive device 10 comprises the partitions 44, contacts and/or short circuiting between the adjacent power lines 30 can be suppressed. For example, if the power lines 30 are flexible conductors such as braided wires, it may be easier for the power lines 30 to contact each other due to vibration. According to the present embodiment, however, the partitions 44 can prohibit the power lines 30 from contacting each other. Even if the insulating films which cover the flexible conductors are damaged in the power lines 30 and this results in exposing a part of the conductors, the partitions 44 can suppress the conductors from contacting each other.

The first terminal(s) 32 may rotate about the fastening member(s) 46 when the first terminal(s) 32 are being fastened by the fastening member(s) 46. Likewise, the first terminal(s) 32 may rotate about the fastening member(s) 46 due to vibration and/or loosening of the fastening member(s) 46, for example. According to the present embodiment, each of the partitions 44 comprises the second partition portion 44b in addition to the first partition portion 44a. Due to this, even if the first terminal(s) 32 rotate, the second partition portion(s) 44b can suppress the adjacent first terminals 32 from contacting each other.

The embodiment which has been described with reference to FIGS. 1 to 3 so far will be referred to as the first embodiment for the sake of convenience. Hereafter, embodiments other than the first embodiment will be described. For each embodiment, different features from the first embodiment will be described, and descriptions of same features as those of the first embodiment will be omitted.

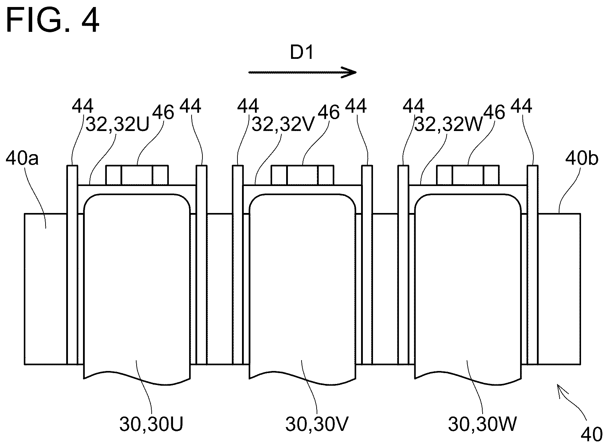

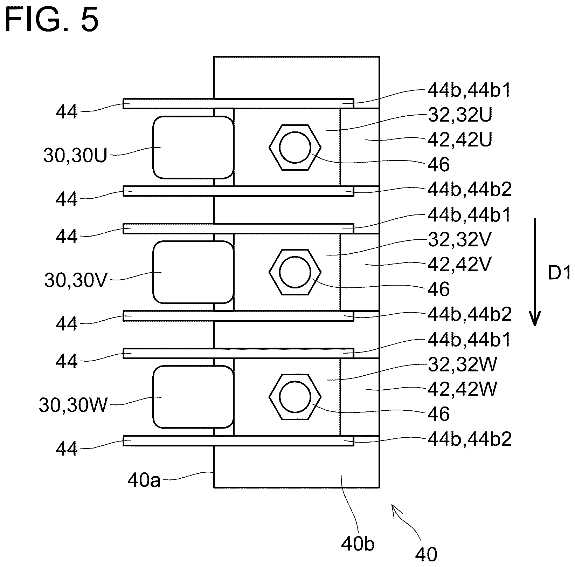

The second embodiment will be described. FIG. 4 schematically illustrates a configuration including a terminal block 40 according to the second embodiment from the same viewpoint as FIG. 3. FIG. 5 schematically illustrates the configuration including the terminal block 40 shown in FIG. 4 from a viewpoint facing the support surface 40b. According to the second embodiment, the second partition portions 44b of the partitions 44 comprise a plurality of "pairs of wall portions 44b1, 44b2" each of which corresponds to one of the plurality of first terminals 32. Each of the pairs of wall portions 44b1, 44b2 is arranged at a position sandwiching the corresponding first terminal 32 in a direction D1 along which the plurality of first terminals 32 is aligned.

The plurality of pairs of wall portions 44b1, 44b2 exists in accordance with the number of the first terminals 32. According to FIG. 5, the first terminal 32U is sandwiched by the pair of wall portions 44b1, 44b2 that corresponds to the second partition portions 44b. Likewise, the first terminal 32V is sandwiched by the pair of wall portions 44b1, 44b2 that corresponds to the second partition portions 44b, and also the first terminal 32W is sandwiched by the pair of wall portions 44b1, 44b2 that corresponds to the second partition portions 44b. According to FIGS. 4, 5, the second embodiment can be regarded as being configured such that two partitions 44 each of which comprises the first partition portion 44a and the second partition portion 44b are arranged between the adjacent power lines 30.

In the direction D1 along which the plurality of first terminals 32 is aligned, a distance between the wall portion 44b1 and the wall portion 44b2 forming the pair and sandwiching the first terminal 32 is equal to or is substantially equal to the width of the first terminal 32. As can be seen from FIGS. 4, 5, each pair of wall portions 44b1, 44b2 sandwiching the first terminal 32 is in contact with or is in close proximity to the first terminal 32 which the pair sandwiches. Accordingly, each of the plurality of first terminals 32 is substantially uncapable of rotating due to the pair of wall portions 44b1, 44b2 sandwiching the first terminal 32 itself. Because the first terminals 32 are uncapable of rotating as such, contacts between the first terminals 32 and contacts between the adjacent power lines 30 can be surely prevented.

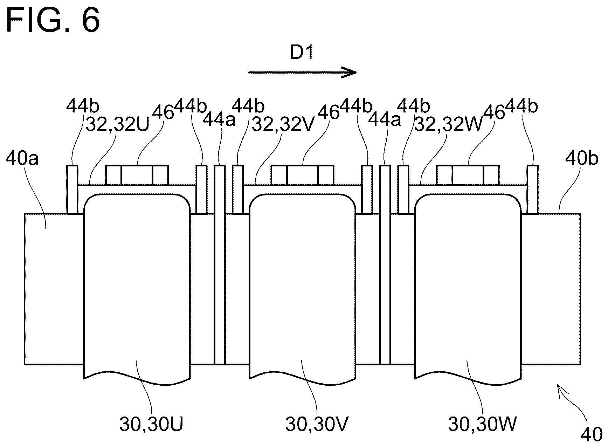

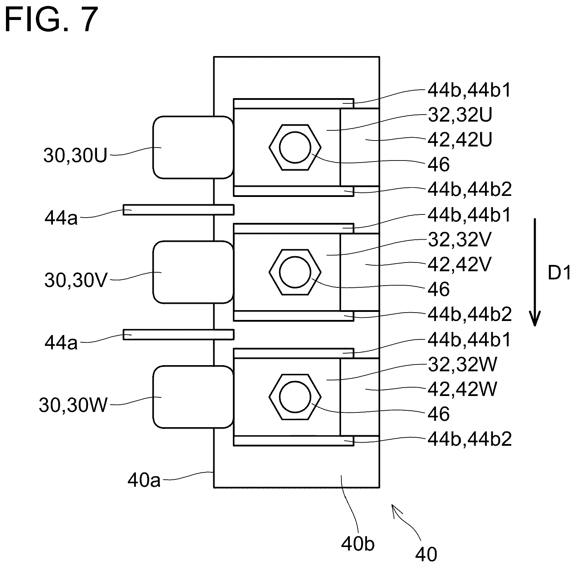

The third embodiment will be described. FIG. 6 illustrates a configuration including a terminal block 40 according to the third embodiment from the same viewpoint as FIGS. 3, 4. FIG. 7 schematically illustrates the configuration including the terminal block 40 shown in FIG. 6 from the same viewpoint as FIG. 5. In the third embodiment also, as in the second embodiment, the second partition portions 44b of the partitions 44 comprise the plurality of pairs of wall portions 44b1, 44b2 each of which corresponds to one of the plurality of first terminals 32. The third embodiment differs from the second embodiment in that the first partition portions 44a of the partitions 44 are disposed such that one first partition portion 44a is arranged between the adjacent power lines 30. That is, the configuration where each first terminal 32 is sandwiched between the second partition portions 44b (the pair of wall portions 44b1, 44b2) may be realized by arranging only the two second partition portions 44b between the adjacent first terminals 32 instead of arranging two partitions 44 including the first partition portions 44a between the adjacent power lines 30. According to the third embodiment, the total amount of materials required for forming the partitions 44 can be reduced as compared to the second embodiment, and the same effects as the second embodiment can be obtained.

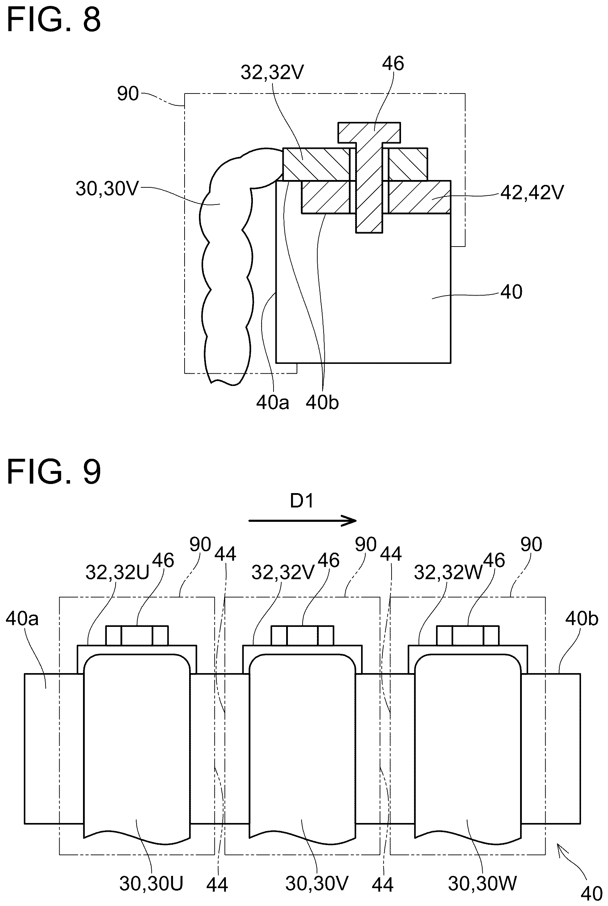

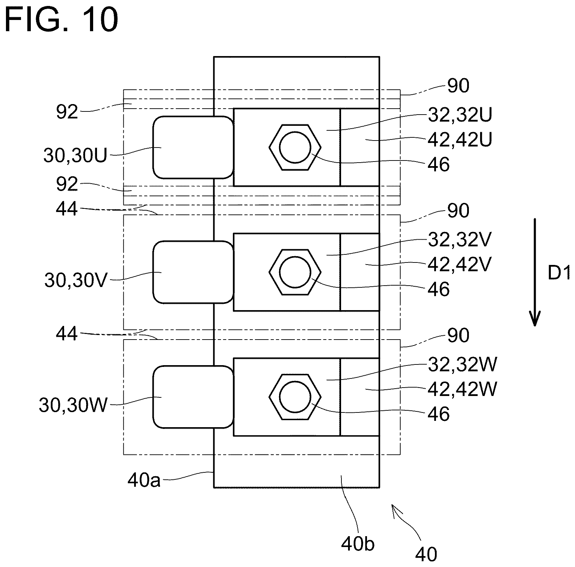

The fourth embodiment will be described. The drive device 10 may comprise covers 90 attached to the terminal block 40. FIG. 8 illustrates a configuration including the covers 90 from the same viewpoint as FIG. 2. Each of FIGS. 9, 10 illustrates the configuration including the covers 90 from the same viewpoints as FIGS. 3, 5, respectively. In FIGS. 8 to 10, the schematic shape of the covers 90 is shown in two-dot dashed lines. The covers 90 are constituted of an insulator such as resin. Each cover 90 covers a range including the power line 30, the first terminal 32, the second terminal 42, and the fastening member 46. Each cover 90 covers a part or an entirety of the range including the power line 30, the first terminal 32, the second terminal 42, and the fastening member 46.

The covers 90 may have hole(s) and/or notch(es) for passing the power line(s) 30 and/or inverter bus bar(s) 60 for example at required position(s) and/or size(s). How the cover(s) 90 are attached to the terminal block 40 is not limited in particular. The covers 90 simply need to be directly or indirectly fixed to the terminal block 40. In the fourth embodiment, the partitions 44 are a part of the covers 90. That is, at least a part of the covers 90 functions as the partitions 44 of the present embodiment. Wall portions, parts of the covers 90, positioned between the adjacent power lines 30 to separate the adjacent power lines 30 fall under the partitions 44. By attaching the covers 90 to the terminal block 40 as such, the same effects as the first embodiment can be obtained.

In FIG. 10, a pair of ribs 92 parallel to each other is shown in a cover 90 covering a certain set of the power line 30, the first terminal 32, the second terminal 42, and the fastening member 46 (i.e., a set of the power line 30U, the first terminal 32U, the second terminal 42U, and one fastening member 46). The pair of ribs 92 extends along a direction intersecting the direction D1, and are spaced from each other in the direction D1. The pair of ribs 92 is a part of an internal structure of the cover 90. The pair of ribs 92 falls under the pair of wall portions 44b1, 44b2 described in the second and third embodiments. In other words, in the fourth embodiment, the pair of wall portions 44b1, 44b2 may be disposed within the cover 90. Although this is omitted in FIG. 10, the pair of ribs 92 may be disposed within each of the plurality of covers 90. After the first terminals 32 and the second terminals 42 have been fastened with each other with the fastening members 46, by attaching the covers 90 to the terminal block 40, thereafter, the first terminals 32 can be prevented from rotating by the pairs of wall portions 44b1, 44b2, i.e., by the pairs of ribs 92.

In the example of FIGS. 9, 10, one cover 90 is attached to each set of the power line 30, the first terminal 32, the second terminal 42, and the fastening member 46. That is, in the example of FIGS. 9, 10, three covers 90 are attached to the terminal block 40 in the same manner. However, these plural covers 90 may be a single cover integrally molded.

While specific examples of the present disclosure have been described above in detail, these examples are merely illustrative and place no limitation on the scope of the patent claims. The technology described in the patent claims also encompasses various changes and modifications to the specific examples described above. The technical elements explained in the present description or drawings provide technical utility either independently or through various combinations. The present disclosure is not limited to the combinations described at the time the claims are filed. Further, the purpose of the examples illustrated by the present description or drawings is to satisfy multiple objectives simultaneously, and satisfying any one of those objectives gives technical utility to the present disclosure.

## Claims

1. A drive device (10) comprising:
a plurality of power lines (30) respectively connected to coils (24) attached to a stator core (22);
a plurality of first terminals (32) disposed respectively at ends of the plurality of power lines (30) opposite to ends of the plurality of power lines (30) that are connected to the coils (24);
a terminal block (40);
a plurality of second terminals (42) supported by the terminal block (40), with the plurality of second terminals (42) spaced from each other;
a plurality of fastening members (46) fixed to the terminal block (40) and fastening the plurality of first terminals (32) and the plurality of second terminals (42) in pairs on one-to-one basis; and
one or more partitions (44) each formed by an insulator located between adjacent ones of the plurality of power lines (30).

2. The drive device (10) according to claim 1, wherein each of the plurality of power lines (30) comprises a flexible conductor and an insulating film covering around the conductor.

3. The drive device (10) according to claim 1 or 2, wherein the one or more partitions (44) are integrally molded with the terminal block (40).

4. The drive device (10) according to one of claims 1 to 3, wherein the terminal block (40) comprises a support surface (40b) that supports the plurality of second terminals (42) and to which the plurality of fastening members (46) is fixed, and a side surface (40a) facing toward the power lines (30) extending from the plurality of first terminals (32), and
the one or more partitions (44) comprise a first partition portion (44a) protruding from the side surface (40a) and separating the adjacent power lines (30), and a second partition portion (44b) protruding from the support surface (40b) and separating adjacent ones of the plurality of first terminals (32).

5. The drive device (10) according to claim 4, wherein the second partition portion (44b) comprises a plurality of pairs of wall portions (44b1, 44b2), each pair of wall portions (44b1, 44b2) corresponding to one of the plurality of first terminals (32), and
each pair of wall portions (44b1, 44b2) is located at a position sandwiching the corresponding first terminal (32) in a direction along which the plurality of first terminals (32) is aligned.

6. The drive device (10) according to claim 1 or 2, further comprising a cover (90) attached to the terminal block (40), wherein the cover (90) is formed by an insulator and covers an area including at least one of the plurality of power lines (30), at least one of the plurality of first terminals (32), at least one of the plurality of second terminals (42), and at least one of the plurality of fastening members (46), and
the one or more partitions (44) are a part of the cover (90).
